# EUROPÄISCHE PATENTANMELDUNG

(11) **EP 4 339 135 A1**
(43) Veröffentlichungstag der Anmeldung: **20.03.2024**
(21) Anmeldenummer: 23193819.2
(22) Anmeldetag: 29.08.2023
(51) Int. Cl.: B65G 35/00, B07C 5/02, B29C 49/42

(54) **VERFAHREN ZUM VEREINZELN VON VORFORMLINGEN SOWIE VEREINZELUNGSVORRICHTUNGEN**

(30) Priorität: 12.09.2022 DE 102022123092
(71) Anmelder: KHS GmbH, 44143 Dortmund (DE)
(72) Erfinder: Holler, Dieter, 23843 Bad Oldesloe (DE); Heller, Alexander, 22941 Bargteheide (DE)

(57) **Zusammenfassung**

Die Erfindung betrifft ein Verfahren zum Vereinzeln von Vorformlingen (1) in einer Vereinzelungsvorrichtung (5) mit zumindest zwei eine Fördergasse bildenden Förderrollen (6), deren Drehachse parallel zu der Fördergasse angeordnet ist und wobei die Vorformlinge (1) entlang der Fördergasse durch gegenläufige Rotation der Förderrollen (6) bewegt werden. Erfindungsgemäß wird in einem an die Fördergasse unmittelbar anschließenden Auslaufabschnitt (10) ein Belegungsmaß von Vorformlingen (1) bestimmt und bei einer Überschreitung eines Sollwertes eine Drehgeschwindigkeit der Förderrollen (6) vorübergehend reduziert.

## Beschreibung

Die vorliegende Erfindung betrifft ein Verfahren zum Vereinzeln von Vorformlingen in einer Vereinzelungsvorrichtung mit zumindest zwei eine Fördergasse bildenden Förderrollen, deren Drehachse im Wesentlichen parallel zu der Fördergasse angeordnet ist und wobei die Vorformlinge entlang der Fördergasse durch gegenläufige Rotation der Förderrollen bewegt werden.

Die Erfindung bezieht sich auf Vereinzelungsvorrichtungen aus dem Bereich der Getränkeindustrie, wobei es sich bei den Vorformlingen um sogenannte Preforms handelt, welche in einer Blasmaschine zu Getränkebehältern ausgebildet werden. Entsprechend bestehen die Vorformlinge aus einem thermoplastischen Material, insbesondere aus Polyethylenterephthalat (PET), sodass sie in geeigneter Art und Weise erwärmt, aufgeweicht und sodann durch Beaufschlagung mit einem Innendruck zu einem Behälter expandiert werden können.

Um einen unterbrechungsfreien Herstellungsprozess in der Blasmaschine zu gewährleisten, muss diese kontinuierlich mit Vorformlingen beschickt werden. Diese liegen üblicherweise vorgefertigt vor und müssen ausgehend von einem Sammelbehälter vereinzelt und ausgerichtet der Blasmaschine zugeführt werden.

Bekannte Vorrichtungen bestehen insbesondere aus einem Steigförderer, über den die in einem Sammelbehälter gelagerten Vorformlinge der Vereinzelungsvorrichtung zugeführt werden. Die Vereinzelungsvorrichtung hat dann die Aufgabe, die Vorformlinge zu vereinzeln und in eine vordefinierte Position auszurichten. Dies erfolgt gemäß der vorliegenden Erfindung durch die gegenläufig rotierenden Förderrollen. Aus diesem Grunde werden derartige Vereinzelungseinrichtungen auch als Rollensortierer bezeichnet. Diese beiden Fördererrollen sind zueinander beabstandet und bilden hierdurch eine Fördergasse, durch die die Vorformlinge entlang einer Förderrichtung transportiert werden können.

Der Abstand der Förderrollen zueinander und damit die Breite der Fördergasse ist so bemessen, dass die Vorformlinge mit ihrem sogenannten Neckring zwischen den Förderrollen hängen bleiben und durch die gegenläufige Rotation der Förderrollen kontinuierlich nach oben geworfen werden. Durch diese Wurfbewegung richten sich die Vorformlinge derart aus, dass deren Öffnung nach oben zeigt, während der später in der Blasmaschine auszuformenden Bereich der Vorformlinge zwischen den Förderrollen in der Fördergasse angeordnet ist. Durch eine Schrägstellung der Förderrollen wird der Transport in Förderrichtung bewirkt.

Entsprechende Ausgestaltungen sind beispielsweise aus der EP 2 892 661 oder der WO 2011/069268A1 bekannt. In diesen Druckschriften wird sich darüber hinaus mit der Problematik von schräggestellten Vorformlingen befasst, welche sich nicht in geeigneter Art und Weise in die Fördergasse einbringen lassen. Dies ist insbesondere dann problematisch, wenn eine hohe Anzahl von Vorformlingen in die Vereinzelungsvorrichtung eingebracht wird und diese sich so miteinander verhaken, dass auch durch die Rotation der Förderrollen nicht alle Vorformlinge in die Fördergasse eingereiht werden können.

Insbesondere bei einem hohen Durchsatz von Vorformlingen kann es darüber hinaus am Übergang zwischen der Fördergasse und einem unmittelbar daran anschließenden Auslaufabschnitt zu einem ungewollten Aufstauen der Vorformlinge und Verhaken untereinander kommen, wodurch die Förderung und Vereinzelung beeinträchtigt wird. Diese Problematik ergibt sich insbesondere dadurch, dass am Ende der Fördergasse kein Vorschub mehr durch die gegenläufig rotierenden Förderrollen erfolgt. Beispielsweise ist der Auslaufabschnitt an einer sogenannten Zuführrutsche gebildet oder schließt an eine entsprechende Zuführrutsche an, wobei dann die Preforms allein aufgrund der Schwerkraft z. B. einem Transportstern zugeführt werden. Unmittelbar hinter der Fördergasse werden die Vorformlinge aufgrund des fehlenden Vortriebes durch die Förderrollen ein Stück weit abgebremst und stauen sich in Folge dessen auf. Hierbei ist zu beachten, dass die Belegung der Fördergasse nicht konstant ist, sondern je nach Förderungen durch den Steigförderer mal mehr und mal weniger Vorformlinge durch die Vereinzelungsvorrichtung geleitet werden. Gerade wenn mehrere Vorformlinge kettenförmig aneinander aufgereiht sind, ist ein Aufstauen besonders problematisch.

Der vorliegenden Erfindung liegt daher die Aufgabe zugrunde, ein Verfahren anzugeben, welches ein Aufstauen und Verhaken der Vorformlinge am Auslauf der Fördergasse wirksam verhindert.

Gegenstand der Erfindung und Lösung der Aufgabe ist ein Verfahren gemäß Patentanspruch 1. Dementsprechend ist erfindungsgemäß vorgesehen, dass in einem an die Fördergasse unmittelbar anschließenden Auslaufabschnitt ein Belegungsmaß von Vorformlingen bestimmt und bei Abweichung eines Sollwertes eine Drehgeschwindigkeit der Förderrollen vorübergehend verändert wird. Mit einem Belegungsmaß ist im Rahmen der Erfindung ein Maß für die Anzahl der Vorformlinge in dem Auslaufabschnitt gemeint.

Insbesondere ist vorgesehen, dass im Falle einer Überschreitung eines vorbestimmten Sollwerts, die Drehgeschwindigkeit der Förderrollen vorübergehend reduziert wird, um das Nachfördern von Vorformlingen in den Auslaufabschnitt zu verringern, sodass entsprechend der durch die nachfolgenden Vorformlinge verursachte Staudruck verringert werden kann. Somit wird vorübergehend in die Förderung der Vorformlinge eingegriffen, um in kritischen Situationen ein Aufstauen und Verhaken der Vorformlinge in dem Auslaufabschnitt zu verhindern. Nach einem gewissen Zeitintervall kann dann die Drehgeschwindigkeit der Förderrollen wieder zurückgesetzt werden, sodass eine betriebsgemäße Förderung der Vorformlinge ermöglicht wird.

Gemäß einer Weiterbildung des erfindungsgemäßen Verfahrens wird das Belegungsmaß in dem Auslaufabschnitt an einer von der Fördergasse beabstandeten Messstelle bestimmt. Bei dieser Messstelle kann es sich weitestgehend um einen Messpunkt handeln, an welchem beispielsweise ein Belegungssensor angeordnet ist. Entsprechend handelt es sich nicht um einen Punkt im mathematischen Sinn, sondern vielmehr um einen kleinen Bereich des Auslaufabschnittes. Entsprechend wird das Belegungsmaß ausschließlich an einer bestimmten Messstelle im Auslaufabschnitt ermittelt, wobei durch die Beabstandung der Messstelle zu der Fördergasse ein gewisses Zeitfenster für die Ansteuerung der Förderrollen geschaffen wird, in dem dann die vorübergehende Reduzierung der Drehgeschwindigkeit bewirkt wird. Der Abstand richtet sich insbesondere nach der Größe der Vorformlinge sowie des Durchsatzes der Vorformlinge in der Vereinzelungsvorrichtung. Der Abstand beträgt ausgehend von dem Ende der Förderrollen insbesondere zwischen 120 und 240 mm, bevorzugt zwischen 150 und 200 mm.

Eine Weiterbildung der Erfindung sieht vor, dass das Belegungsmaß der Zeitdauer für das Vorhandensein von Vorformlingen an der Messstelle entspricht. Entsprechend wird an der Messstelle ermittelt, ob ein Vorformling vorhanden ist oder nicht. Sofern beispielsweise die Vorformlinge vereinzelt vorliegen kann beispielsweise ein entsprechender Belegungssensor für eine vergleichsweise geringe Zeitdauer die Belegung der Messstelle detektieren, wobei dann an diese Belegung ein Zeitraum anschließt, in welchem der entsprechende Belegungssensor keine Belegung detektiert. Sofern mehrere Vorformlinge in Form einer Kette unmittelbar aneinander anschließen, verlängert sich die Zeitdauer für das Vorhandensein von Vorformlingen bzw. die Zeitdauer eines von dem Belegungssensor ermittelten Signals. Somit bildet das Belegungsmaß eine Zeitdauer ab, in der ununterbrochen ein Vorformling an der Messstelle angeordnet ist bzw. in der ununterbrochen ein Belegungssignal von dem Belegungssensor ermittelt wird. Durch Definitionen eines vorbestimmten Sollwertes in Form einer Belegungszeit kann dann bei Überschreiten dieses Sollwertes eine Reduzierung der Drehgeschwindigkeit erfolgen.

Bevorzugt wird das Maß für die Reduzierung der Drehgeschwindigkeit auf Basis eines Betriebsrezeptes bestimmt. Bei diesem Betriebsrezept handelt es sich um einen Parametersatz, welcher bevorzugt Einstellungen der Sensorik und Geschwindigkeiten der Vereinzelungseinrichtungen enthält. Diese Einstellungen werden anhand von Informationen über die Form, das Gewicht, die Größe und/oder den Durchsatz der Vorformlinge ausgewählt. Hierbei wird davon ausgegangen, dass in Abhängigkeit dieser Parameter bzw. Informationen unterschiedliche Reduzierungen erforderlich sind, um ein Aufstauen und Verhaken der Vorformlinge im Auslaufabschnitt zu verhindern. Beispielsweise können vergleichsweise kleine und leichte Vorformlinge sehr viel eher nach oben gedrückt werden und sich verhaken, sodass eine schnelle Regelung der Fördergeschwindigkeit von entscheidender Bedeutung ist. Allerdings kann mit einer vergleichsweise geringen Reduzierung der Drehgeschwindigkeit der Staudruck so verringert werden, dass sich die Preforms in einfacher Art und Weise wieder einreihen lassen. Im Gegensatz dazu neigen größere und schwerere Preforms nicht so leicht zu einem Verhaken. Allerdings ist eine deutlich größere Verringerung der Drehgeschwindigkeit erforderlich, sollte es bereits zu einem Aufstauen gekommen sein.

Unabhängig von der jeweiligen Ausgestaltung und unabhängig von dem Betriebsrezept wird die Drehgeschwindigkeit vorübergehend um 20 bis 80 %, besonders bevorzugt um 30 bis 70 % reduziert. Hierbei bezieht sich der Prozentsatz auf eine betriebsgemäße Drehgeschwindigkeit, mit welcher die Förderrollen unabhängig von dem in dieser Erfindung vorgelegten Steuerungseingriff rotieren. Darüber hinaus wird die Drehgeschwindigkeit auch bevorzugt parallel bei beiden Förderrollen um den gleichen Faktor reduziert.

Wie bereits zuvor erläutert, ist es ausreichend, wenn die Drehzahl ausschließlich für ein bestimmtes Zeitintervall reduziert wird und anschließend zurück auf die betriebsgemäße Drehgeschwindigkeit gesetzt wird. Bevorzugt ist hierbei vorgesehen, dass das Zeitintervall zwischen 0,5 und 3 s, besonders bevorzugt zwischen 1 und 2 s, beträgt. Es handelt sich somit um einen vergleichsweise kurzen Regeleingriff, der die betriebsgemäße Förderergeschwindigkeit der Vereinzelungsvorrichtung nicht nennenswert beeinträchtigt.

Bevorzugt ist ferner vorgesehen, dass die betriebsgemäße Drehgeschwindigkeit aus diskreten Drehgeschwindigkeiten ausgewählt werden kann. Folglich weist das erfindungsgemäße Verfahren verschiedene Geschwindigkeitsstufen auf, mit welchen die Förderrollen betrieben werden können. Die Anzahl dieser Geschwindigkeitsstufen ist nicht weiter festgelegt. Besonders bevorzugt sind jedoch zumindest zwei, bevorzugt zumindest drei Geschwindigkeitsstufen vorgesehen.

Gegenstand der Erfindung ist ferner eine Vereinzelungsrichtung gemäß Patentanspruch 9, welche insbesondere für das erfindungsgemäße Verfahren vorgesehen ist und zumindest zwei gegenläufig rotierbar eingerichtete Förderrollen aufweist, deren Drehachse parallel zu der Fördergasse angeordnet sind und wobei die Förderrollen zur Bildung der Fördergasse zueinander beabstandet sind und wobei den Förderrollen zumindest eine Antriebseinrichtung zugeordnet ist. Diese Antriebseinrichtung kann bevorzugt beide Förderrollen gleichermaßen antreiben. Selbstverständlich liegt es aber auch im Rahmen der Erfindung, dass jeder Förderrolle eine separate Antriebseinrichtung zugeordnet ist, sodass entsprechend die Drehgeschwindigkeit der Förderrollen unabhängig voneinander eingestellt werden kann.

Erfindungsgemäß schließt die Fördergasse an einen Auslaufabschnitt an, indem ein Belegungssensor zur Detektion von Vorformlingen angeordnet ist und wobei eine Steuereinheit dazu eingerichtet ist, auf Basis der von den Belegungssensor ermittelten Signale die zumindest eine Antriebseinrichtung der Förderrollen zu steuern. Entsprechend ist die Steuereinheit dazu eingerichtet, dass zuvor beschriebene Verfahren durchzuführen.

Bei dem Belegungssensor handelt es sich im einfachsten Fall um einen Sensor, welcher ausschließlich zwischen einem Belegungszustand und einem nicht belegten Zustand in dem Auslaufabschnitt unterscheiden kann. Folglich liegen also ausschließlich zwei Zustände vor. Durch eine Zeitmessung des belegten Zustandes kann eine Belegungszeit ermittelt werden, welche in der Steuereinheit mit einer Sollbelegungszeit verglichen wird. Entsprechend handelt es sich bei der Sollbelegungszeit um den Sollwert gemäß dem erfindungsgemäßen Verfahren. Wird dann diese Sollbelegungszeit überschritten, erfolgt durch die Steuereinheit ein Eingriff in die Antriebseinrichtungen, wobei die Steuereinheit so eingerichtet ist, dass bei Überschreiten der Sollbelegungszeit die Drehgeschwindigkeit der Förderrollen vorübergehend bzw. für ein Zeitintervall reduziert wird. Bei dem Belegungssensor kann es sich beispielsweise auch um eine Kameraeinrichtung handeln, welche optisch einen Belegungszustand in dem Auslaufabschnitt ermittelt.

Bevorzugt ist vorgesehen, dass der Belegungssensor in einem Abstand zu der Fördergasse angeordnet ist. Entsprechend definiert der Belegungssensor eine Messstelle in dem Auslaufabschnitt, wobei sich der Abstand zwischen dem Belegungssensor und der Fördergasse danach bestimmt, wie schnell ein Regeleingriff bewirkt werden kann. Bevorzugt beträgt der Abstand zwischen 120 und 240 mm, besonders bevorzugt zwischen 150 und 200 mm.

Eine Weiterbildung der Erfindung sieht vor, dass die Fördergasse unterhalb der Förderrollen durch eine Linearführung gebildet ist. Die Breite der Linearführung kann je nach Preform geringer sein als der Abstand der Förderrollen zueinander. Entsprechend bilden die Förderrollen eine Fördergasse, welche sich unterhalb der von den Förderrollen gebildeten Fördergasse in einer Linearführung fortsetzt. In diese Linearführung greifen die Bereiche der Vorformlinge ein, welche im Zuge des Blasformens ausgeformt werden, während die Vorformlinge zwischen den Förderrollen in der Fördergasse über den Neckring gehalten werden. Hierdurch wird ein seitliches Verkippen der Vorformlinge während der Förderung verhindert.

Darüber hinaus ist vorgesehen, dass die Fördergasse zumindest oberhalb von einer Wandung bedeckt ist. Diese Wandung setzt sich insbesondere bis zum Auslaufabschnitt fort.

Eine Weiterbildung sieht ferner vor, dass die Förderrollen gegenüber einem Grundgestell in vertikaler Richtung schräg angeordnet sind. Durch diese schräge Anordnung soll insbesondere der Transport der Vorformlinge gewährleistet werden. Mit der vertikalen Richtung ist im Rahmen der Erfindung eine Richtung parallel zu Lotrechten gemeint und orientiert sich demnach an der wirkenden Schwerkraft. Der zwischen den Förderrollen und dem Grundgestell gebildete Winkel beträgt bevorzugt zwischen 8 und 10°.

Eine Weiterbildung sieht ferner vor, dass der Auslaufabschnitt an eine Luftförderstrecke oder an eine Förderrutschstrecke anschließt bzw. an einer Luftförderstrecke oder an einer Förderrutschstrecke gebildet ist. Eine Förderrutsche wurde bereits im Vorfeld eingehend erläutert, wobei durch die Schrägstellung dieser Rutsche eine Förderung der Vorformlinge z. B. an einen Transportstern bewirkt werden kann. Bei einer Luftförderstrecke erfolgt die Zuführung durch Beschleunigen der Vorformlinge durch Druckluft. Die Luftförderstrecke kann beispielsweise gerade oder aber auch schräg angeordnet sein, wobei sich bei einer schrägen Anordnung die Vorteile einer Luftförderstrecke und einer Förderrutsche überlagern.

Im Folgenden wird die Erfindung anhand von Ausführungsbeispielen näher erläutert. Es zeigen:
- Fig. 1: eine schematische Darstellung einer als Rollensortierer ausgebildeten Vereinzelungseinrichtung
- Fig. 2, 3: schematische Darstellungen der Förderung von Vorformlingen in der Vereinzelungsvorrichtung gemäß Fig. 1
- Fig. 4, 5: Darstellungen des Belegungssignals gemäß dem in den Fig. 2, 3 dargestellten Zustand

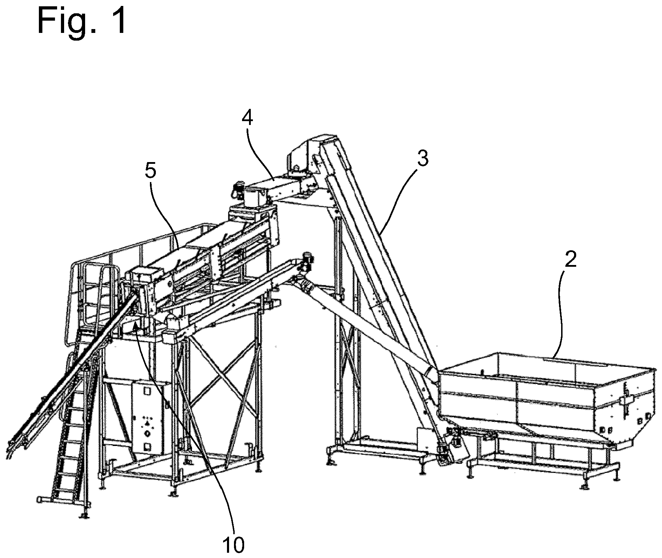

Die Fig. 1 zeigt eine Vorrichtung zum Transport und zur Vereinzelung von Vorformlingen 1, welche beispielsweise in einem vereinzelten Zustand einer Blasmaschine für die Herstellung von Getränkeflaschen zugeführt werden. Die Vorformlinge 1 sind üblicherweise aus einem thermoplastischen Kunststoff, insbesondere aus Polyethylenterephthalat (PET) gebildet, und liegen zunächst in einem Sammelbehälter 2 vor. Ausgehend von diesem Sammelbehälter 2 werden die Vorformlinge 1 über einen Steigförderer 3 zu einer Fördereinrichtung 4 transportiert, welche an ihrem Ende oberhalb einer Vereinzelungsvorrichtung 5 angeordnet ist.

Die Vereinzelungsvorrichtung 5 weist zwei Förderrollen 6 auf, welche eine parallel zueinander angeordnete Drehachse D aufweisen und darüber hinaus beabstandet zueinander angeordnet sind. Durch diese Beabstandung bilden die beiden Fördererrollen 6 eine Fördergasse, durch die die Vorformlinge 1 transportiert werden. Hierbei erfolgt der Transport und die Vereinzelung der Vorformlinge 1 einerseits durch eine gewisse Schrägstellung der Drehachsen D, sodass die Vorformlinge 1 allein aufgrund ihres Gewichts ein Stück weit zwischen den Fördererrollen 6 durch die Fördergasse entlang einer Förderrichtung F rutschen.

Darüber hinaus sind die Fördererrollen 6 gegenläufig zueinander rotierbar eingerichtet, wobei im Bereich der Fördergasse die Vorformlinge 1 eine Aufwärtsbewegung erfahren, und diese entlang der Förderrichtung F nach oben geworfen werden. Durch diese Wurfbewegung sortieren sich die Vorformlinge 1 einerseits innerhalb der Fördergasse ein, wobei die Vorformlinge 1 mit ihrem Neckring 7 zwischen den beiden Fördererrollen 6 hängen bleiben. Der Bereich 8 der Vorformlinge 1 kann sich hingegen durch die Fördergasse senkrecht zur Förderrichtung F hindurch erstrecken, sodass entsprechend die Öffnungen der Vorformlinge 1 nach oben zeigen.

Die Drehgeschwindigkeit der Fördererrollen 6 wird über eine Antriebseinrichtung 9 bestimmt, wobei beide Fördererrollen 6 durch die gleiche Antriebseinrichtung 9 angetrieben werden und somit beide Fördererrollen 6 die gleiche Drehgeschwindigkeit aufweisen.

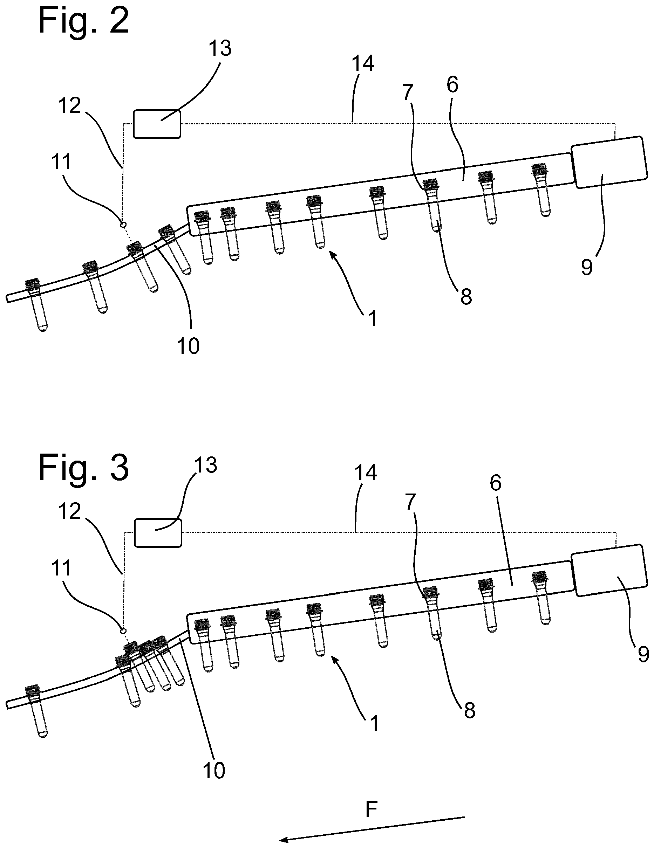

An die Fördererrollen 6 und damit auch an die Fördergasse schließt dann ein Auslaufabschnitt 10 an, wobei in diesem Auslaufabschnitt 10 die Vorformlinge 1 keinen Vortrieb mehr durch die Bewegung der Fördererrollen 6 erfahren. Vor diesem Hintergrund können die Vorformlinge 1 zu einem gewissen Maße abgebremst werden, was insbesondere bei einer unmittelbaren Aneinanderreihung von Vorformlingen 1 problematisch ist. Dies wird insbesondere deutlich anhand eines Vergleiches der Figuren 1 und 2.

Je nach Zuführungen von Vorformlingen 1 in die Vereinzelungsvorrichtung 5 weisen die Vorformlinge 1 entlang der Förderrichtung F ein unterschiedliches Beladungsmaß auf, wobei gemäß der Fig. 1 die einzelnen Vorformlinge 1 zu einem gewissen Maße zueinander beabstandet sind, während gemäß der Fig. 3 im Auslaufabschnitt 10 einer Aneinanderreihung von insgesamt vier Vorformlingen 1 vorliegt. Hierdurch können einzelne Vorformlinge 1 aus der Ebene nach oben geschoben werden, sodass sich die Vorformlinge 1 verhaken. Gerade bei einem hohen gewünschten Durchsatz von Vorformlingen 1 ist dies problematisch.

Aus diesem Grunde sieht die Erfindung einen Belegungssensor 11 vor, welcher eine Belegung an einer bestimmten Messstelle im Auslaufabschnitt 10 erfasst und die Signale über ein Signalkabel 12 an eine Steuereinheit 13 weiterleitet. In dieser Steuereinheit 13 wird überprüft, ob ein vorbestimmter Sollwert für das Belegungsmaß überschritten wird, wobei bei Überschreiten dieses Sollwertes die Antriebseinrichtung über ein weiteres Signalkabel 14 derart angesteuert wird, dass die Drehgeschwindigkeit der Fördererrollen 6 um ein bestimmtes Maß reduziert wird.

Insbesondere ist vorgesehen, dass sich die Drehgeschwindigkeit um 20 bis 80 % ausgehend von einer betriebsgemäßen Drehgeschwindigkeit reduziert, wobei diese Reduzierung nur für ein bestimmtes Zeitintervall vorgesehen ist. Dieses Zeitintervall kann insbesondere zwischen 0,5 und 3 s betragen, wobei im Anschluss die Drehgeschwindigkeit zurück auf die betriebsgemäße Drehgeschwindigkeit gesetzt wird. Diese kurzzeitige Reduzierung der Drehgeschwindigkeit reicht aus, um bei einer Aneinanderreihung von Vorformlingen 1 ein Hochschieben und Verhaken zu verhindern, da der auf die Vorformlinge 1 lastende Staudruck verringert wird.

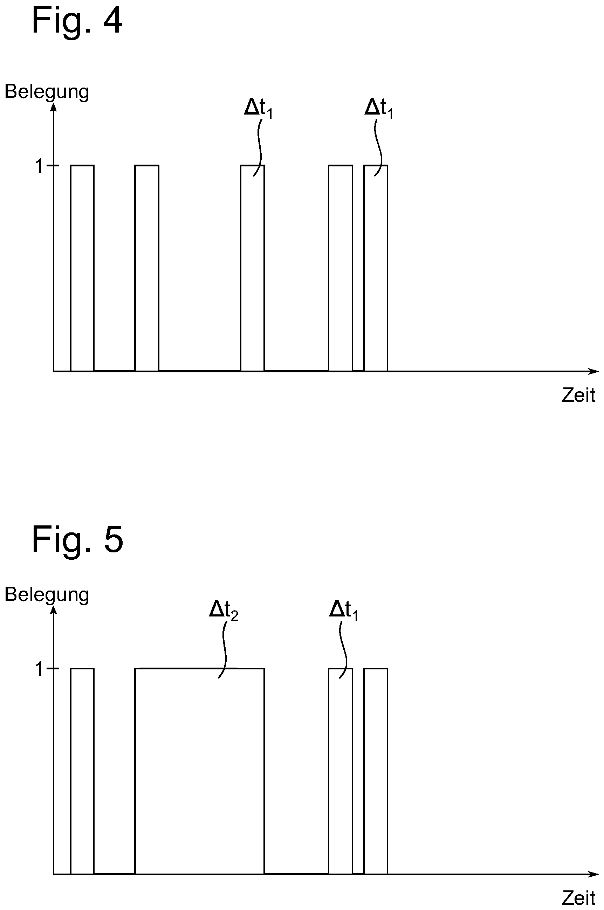

Gemäß den Fig. 4 und 5 erfolgt die Bestimmung des Belegungsmaßes anhand einer Zeitmessung, wobei der Belegungssensor 11 ausschließlich zwischen zwei Zuständen unterscheiden kann. In einem Zustand 0 liegt an dem Belegungssensor 11 kein Vorformling vor, während bei einem Zustand 1 ein Vorformling im Bereich des Belegungssensors 11 angeordnet ist. Sodann erfolgt eine Messung des Zeitintervalls, während dem eine Belegung von dem Belegungssensor 11 erfasst wird. Hierbei bildet die Fig. 4 ein Zeit-Belegungs-Diagramm des Zustands gemäß der Fig. 2 ab, in dem die Vorformlinge mehr oder weniger einzelnen vorliegen. Das in der Fig. 4 dargestellte Zeitintervall Δt₁ bildet hierbei ein Signal ab, welches für den Durchlauf von nur einem Vorformling 1 charakteristisch ist.

Gemäß der Fig. 5 ist darüber hinaus ein Zeitintervall Δt₂ dargestellt, welches erheblich breiter ausgebildet ist als das Zeitintervall Δt₁, sodass für die Steuereinheit 13 ersichtlich mehrerer Vorformlinge 1 hintereinander die Messstelle am Belegungssensor 11 passieren. Gemäß der Fig. 3 wird deutlich, dass insgesamt vier Vorformlinge 1 hintereinander angeordnet sind, sodass diese Aneinanderreihung ursächlich für das in der Fig. 5 dargestellt Zeitintervall Δt₂ ist.

Die Zeitintervalle Δt₁, Δt₂ werden mit einem vorbestimmten Zeitintervall bzw. einem vorbestimmten Sollwert verglichen, wobei das Zeitintervall Δt₂ den Sollwert überschreitet und die Drehgeschwindigkeit der Fördererrollen 6 vorübergehend reduziert wird.

Gemäß einer solchen Ausgestaltung entspricht daher das Belegungsmaß der Zeitdauer einer ununterbrochenen Belegung an einer Messstelle im Auslaufabschnitt 10, wobei die Messstelle durch den Belegungssensor 11 definiert wird. Anstelle eines Belegungssensor 11 ist es selbstverständig auch möglich auf andere Sensortypen zurückzugreifen. Insbesondere kann auch mit einer Kamera eine Belegung detektiert werden.

Anhand der Fig. 2 und 3 ist ferner ersichtlich, dass der Belegungssensor 11 in einem Abstand zu den Fördererrollen 6 und damit auch zur Fördergasse angeordnet ist. Dieser Abstand ist erforderlich, damit ein gewisser Zeitraum für den Regelungseingriff zur Verfügung steht.

### Bezugszeichenliste

- 1: Vorformlinge
- 2: Sammelbehälter
- 3: Steigförderer
- 4: Fördereinrichtung
- 5: Vereinzelungsvorrichtung
- 6: Förderrollen
- 7: Neckring
- 8: unterer Bereich der Vorformlinge
- 9: Antriebseinrichtung
- 10: Auslaufabschnitt
- 11: Belegungssensor
- 12: Signalkabel
- 13: Steuereinheit
- 14: Signalkabel
- F: Förderrichtung
- Δt: Zeitintervalle

## Patentansprüche

1. Verfahren zum Vereinzeln von Vorformlingen (1) in einer Vereinzelungsvorrichtung (5) mit zumindest zwei eine Fördergasse bildenden Förderrollen (6), deren Drehachse im Wesentlichen parallel zu der Fördergasse angeordnet ist und wobei die Vorformlinge (1) entlang der Fördergasse durch gegenläufige Rotation der Förderrollen (6) bewegt werden,
**dadurch gekennzeichnet, dass**
in einem an die Fördergasse unmittelbar anschließenden Auslaufabschnitt (10) ein Belegungsmaß von Vorformlingen (1) bestimmt und bei Abweichung eines Sollwertes die Drehgeschwindigkeit der Förderrollen (6) vorübergehend verändert wird.

2. Verfahren nach Anspruch 1, **dadurch gekennzeichnet, dass** bei einer Überschreitung des Sollwertes die Drehgeschwindigkeit der Förderrollen (6) vorübergehend reduziert wird.

3. Verfahren nach Anspruch 1 oder 2, **dadurch gekennzeichnet, dass** das Belegungsmaß in dem Auslaufabschnitt (10) an einer von der Fördergasse beabstandeten Messstelle bestimmt wird.

4. Verfahren nach Anspruch 3, **dadurch gekennzeichnet, dass** das Belegungsmaß der Zeitdauer für das Vorhandensein von Vorformlingen (1) an der Messstelle entspricht.

5. Verfahren nach einem der vorangegangenen Ansprüche, **dadurch gekennzeichnet, dass** das Maß für die Reduzierung der Drehgeschwindigkeit auf Basis eines Betriebsrezepts bestimmt wird.

6. Verfahren nach Anspruch 5, **dadurch gekennzeichnet, dass** das Betriebsrezept Informationen über die Form, das Gewicht, die Größe und/oder den Durchsatz der Vorformlinge (1) enthält.

7. Verfahren nach einem der vorangegangenen Ansprüche, **dadurch gekennzeichnet, dass** die Drehgeschwindigkeit vorübergehend um 20 bis 80 % reduziert wird.

8. Verfahren nach einem der vorangegangenen Ansprüche, **dadurch gekennzeichnet, dass** die Drehgeschwindigkeit für ein Zeitintervall von 0,5 bis 3 s reduziert wird.

9. Verfahren nach einem der vorangegangenen Ansprüche, **dadurch gekennzeichnet, dass** eine betriebsgemäße Drehgeschwindigkeit aus diskreten Drehgeschwindigkeitsstufen ausgewählt wird.

10. Vereinzelungsvorrichtung (5), insbesondere für ein Verfahren nach einem der vorangegangenen Ansprüche, mit zumindest zwei gegenläufig rotierbar eingerichteten Förderrollen (6), deren Drehachse parallel zu der Fördergasse angeordnet und die Förderrollen (6) zur Bildung der Fördergasse zueinander beabstandet sind, wobei den Förderrollen (6) zumindest eine Antriebseinrichtung (9) zugeordnet ist,
**dadurch gekennzeichnet, dass**
die Fördergasse an einen Auslaufabschnitt (10) anschließt, in dem ein Belegungssensor (11) zur Detektion von Vorformlingen (1) angeordnet ist und wobei eine Steuereinheit (13) dazu eingerichtet ist, auf Basis der von dem Belegungssensor (11) übermittelten Signale die zumindest eine Antriebseinrichtung (9) der Förderrollen (6) zu steuern.

11. Vereinzelungsvorrichtung nach Anspruch 9, **dadurch gekennzeichnet, dass** der Belegungssensor (11) in einem Abstand zu der Fördergasse angeordnet ist.

12. Vereinzelungsvorrichtung nach Anspruch 10, **dadurch gekennzeichnet, dass** der Abstand zwischen 120 und 240 mm, besonders bevorzugt zwischen 150 und 200 mm, beträgt.

13. Vereinzelungsvorrichtung nach einem der Ansprüche 9 bis 11, **dadurch gekennzeichnet, dass** die Fördergasse unterhalb der Förderrollen (6) durch eine Linearführung gebildet ist, wobei die Breite der Linearführung geringer ist als der Abstand der Förderrollen zueinander.

14. Vereinzelungsvorrichtung nach einem der Ansprüche 9 bis 12, **dadurch gekennzeichnet, dass** die Fördergasse zumindest oberhalb von einer Wandung bedeckt ist.

15. Vereinzelungsvorrichtung nach einem der Ansprüche 9 bis 13, **dadurch gekennzeichnet, dass** die Förderrollen gegenüber einem Grundgestell in vertikaler Richtung schräg angeordnet sind.

16. Vereinzelungsvorrichtung nach einem der Ansprüche 9 bis 14, **dadurch gekennzeichnet, dass** der Auslaufabschnitt (10) an eine Luftförderstrecke oder an einer Förderrutschstrecke anschließt.
